# EUROPÄISCHE PATENTANMELDUNG

(11) **EP 2 923 543 A1**
(43) Veröffentlichungstag der Anmeldung: **30.09.2015**
(21) Anmeldenummer: 15401023.5
(22) Anmeldetag: 17.03.2015
(51) Int. Cl.: A01C 7/04, A01C 7/08

(54) **PNEUMATISCHE EINZELKORNSÄMASCHINE**

(30) Priorität: 26.03.2014 DE 102014104153
(71) Anmelder: Amazonen-Werke H. Dreyer GmbH & Co. KG, 49205 Hasbergen (DE)
(72) Erfinder:

(57) **Zusammenfassung**

Pneumatische Einzelkornsämaschine mit einer als geschlossene Hohltrommel (7) mit zwei Seitenwänden (4, 5) ausgebildeten drehbaren Vereinzelungseinrichtung (2) mit einer kreisförmigen Perforationsreihe in einer dieser Seitenwände, einer Druckdifferenz an den Perforationen (8) zur Anlagerung von Samenkörnern wenn die Vereinzelungseinrichtung durch den Saatgutvorrat geführt wird, einer die Druckdifferenz zum Ablösen der Samenkörner von den Perforationen unterbrechenden Abdeckeinrichtung (22) auf der Niederdruckseite und gegenüber mit einer Einmündungsöffnung (24) einer Ausbringleitung (25) auf der Hochdruckseite, wobei eine der Seitenwände auf einer in den Innenraum (11) der Hohltrommel (7) geführten Hohlwelle (10) gelagert (12) und abgedichtet (13) ist. Für eine einfache, verbesserte Saatgutführung zu den Ablageeinrichtungen ist ein die Hohltrommel umschließendes Gehäuse (3) geschlossen ausgebildet und über ein Gebläse mit einem Überdruck gegenüber dem im Innenraum der Hohltrommel herrschenden niedrigeren Druck, vorzugsweise Atmosphärendruck, beaufschlagbar.

## Beschreibung

Die Erfindung betrifft eine pneumatische Einzelkornsämaschine gemäß des Oberbegriffes des Patentanspruches 1.

Eine derartige pneumatische Einzelkornsämaschine ist in DE 22 42 272 B1 beschrieben. Diese Einzelkornsämaschine weist zumindest eine rotierend angetriebene Vereinzelungseinrichtung auf. Diese Vereinzelungseinrichtung ist als eine zwei beanstandet zueinander angeordnete Seitenwände aufweisende geschlossene schmale Hohltrommel ausgebildet. Über eine in dem inneren mittleren Bereich der einen Seitenwand angeordneten Lagerung ist die Hohltrommel an dem Gehäuse drehbar gelagert. Weiterhin ist im Bereich der Lagerung der Hohltrommel eine nur einen geringen Durchmesser, etwa entsprechend der Größe der Lagerung aufweisendes umlaufendes Dichtungselement zwischen der Aussparung in der Seitenwand und dem Gehäuse zugeordneten Achsenelement angeordnet. Hierdurch ergeben sich nur sehr geringe Reibungs- und Widerstandskräfte bei der Drehung der Hohltrommel auf dem Achsenelement. Somit sind nur sehr geringe Antriebskräfte für den rotierenden Antrieb der Hohltrommel erforderlich. Bei dieser bekannten Vereinzelungseinrichtung wird der Innenraum der Hohltrommel mit einem Unterdruck beaufschlagt, so dass eine Druckdifferenz an den in zumindest einer der Seitenwände angeordneten Perforationen entsteht. Durch diese Druckdifferenz an den Perforationen lagern sich Samenkörner, wenn die Vereinzelungstrommel mit den Perforationen durch den Saatgutvorrat geführt wird, an. An einer vorbestimmten Stelle, an der die Abdeckeinrichtung angeordnet ist, wird die Druckdifferenz an den Perforationen unterbrochen, so dass die Samenkörner sich von der Vereinzelungseinrichtung lösen und in eine zugeordnete Saatleitung fallen und von hier aus zu einer, beispielsweise als Säschar ausgebildeten Ablageeinrichtung geleitet werden.

Bei dieser bekannten Einzelkornsämaschine erfolgt die Saatgutförderung allein aufgrund der Schwerkraft. Somit müssen die Saatleitungen für eine störungsfreie und gute Saatgutführung relativ steil nach unten fallend ausgebildet und angeordnet sein. Hierdurch ist die Anordnung und freie Ausgestaltung der Saatgutführung stark eingeschränkt. Falls ungünstige Bauverhältnisse und somit daraus resultierenden schlechte Anordnungen der Saatgutführung vorliegen, müssen zusätzliche Bauteile und Förderleitungen eingesetzt werden, um eine Förderunterstützung für die vereinzelten Samenkörner, beispielsweise durch Druckluft bis zu der Ablageeinrichtung zu realisieren.

Eine weitere Einzelkornsämaschine ist durch die EP 0 598 636 B1 bekannt. Diese Einzelkornsämaschine weist ebenfalls eine Vereinzelungseinrichtung auf. Diese Vereinzelungseinrichtung ist wiederum als eine Art Hohltrommel ausgebildet, in deren Zylindermantel in umlaufenden Reihen Perforationen angeordnet sind. Diese Hohltrommel ist in einem geschlossenen Gehäuse angeordnet. Die umlaufenden Enden des Zylindermantels der Hohltrommel sind gegenüber den Seitenwänden des Gehäuses abgedichtet. Aufgrund des großen Durchmessers der Hohltrommel und der sich hieraus ergebenden großen ringförmigen Berührungsfläche zwischen den Enden der Zylindertrommel und den Seitenwänden des Gehäuses ergeben sich große Widerstandskräfte aufgrund der entstehenden Reibung zwischen Zylindertrommel und Seitenwänden. Hierdurch ist ein relativ großes Antriebsmoment zum rotierenden Antrieb der Trommel erforderlich. Bei dieser Einzelkornsämaschine wird das Gehäuse, in dem sich die Hohltrommel befindet, unter einen Überdruck gegenüber dem sich im Innenraum der Trommel befindlichen Atmosphärendruck gesetzt. Hierdurch wird eine Druckdifferenz an den sich in den Zylindermantel der Hohltrommel befindlichen Perforationen erzeugt, so dass sich die Samenkörner an diesem Perforationen anlagern, wenn die Perforationen durch den Saatgutvorrat geführt werden. An einer vorbestimmten Stelle, an der die Abdeckeinrichtung angeordnet ist, wird die Druckdifferenz an den Perforationen unterbrochen, so dass die Samenkörner sich von der Vereinzelungseinrichtung lösen und so in die Öffnung der zugeordneten Saatleitung gelangen. Aufgrund des in dem Gehäuse herrschenden Luftüberdruckes werden von den Perforationen lösenden Samenkörner durch den herrschenden Überdruck in dem Gehäuse und der daraus resultierenden Luftströmung in die Saatleitungen von der Luftströmung mitgerissen und zu den beispielsweise als Säschare ausgebildeten Ablageeinrichtungen gefördert.

Der Erfindung liegt die Aufgabe zu Grunde, ausgehend von der eingangs beschriebenen, bekannten Einzelkornsämaschine unter Beibehaltung des geringen Antriebsmomentes für den rotierenden Antrieb der Vereinzelungstrommel mit einer verbesserten Saatgutführung von der Vereinzelungstrommel zu den Ablageeinrichtungen ohne aufwändige technische Maßnahmen zu schaffen.

Diese Aufgabe der erfindungsgemäß dadurch gelöst, dass das die als Hohltrommel ausgebildete Vereinzelungseinrichtung umschließende Gehäuse geschlossen ausgebildet und über das Gebläse mit einem Überdruck gegenüber dem im Innenraum der Hohltrommel herrschenden niedrigeren Druck, vorzugsweise Atmosphärendruck beaufschlagbar ist.

Infolge dieser Maßnahme bleiben auch bei einer Beaufschlagung des Gehäuses und der Außenseite der Hohltrommel der Vereinzelungseinrichtung mit einem Überdruck die äußerst niedrigen erforderlichen Antriebskräfte für das rotierende Antreiben der Hohltrommel erhalten und gleichzeitig wird der Überdruck in dem Gehäuse dazu genutzt, die Saatleitung mit einer Luftströmung zur Förderung des vereinzelten Saatgutes in der Saatleitung zu nutzen. Hierdurch ergibt sich eine sehr einfache und effektive Ausgestaltung der Vereinzelungseinrichtung mit einer Luftstromförderung für das vereinzelte Saatgut.

Eine sehr einfache Antriebsanordnung zum rotierenden Antreiben der Hohltrommel lässt sich dadurch erreichen, dass an der Hohltrommel ein Zahnrad befestigt ist, dass durch die Gehäusewand des Gehäuses in abgedichteter Weise ein Antriebsmotor und/oder eine Antriebswelle in das Gehäuse hineinragt, dass an dem Antriebsmotor und/oder der Antriebswelle ein drehfest angeordnetes Antriebszahnrad angeordnet ist, dass das Antriebszahnrad mit dem an der Hohltrommel angeordneten Zahnrad in Antriebsverbindung steht.

Eine einfache Ausgestaltung der Antriebsvorrichtung lässt sich dadurch erreichen, dass der Antriebsmotor ein in seiner Drehzahl regelbarer Elektromotor ist.

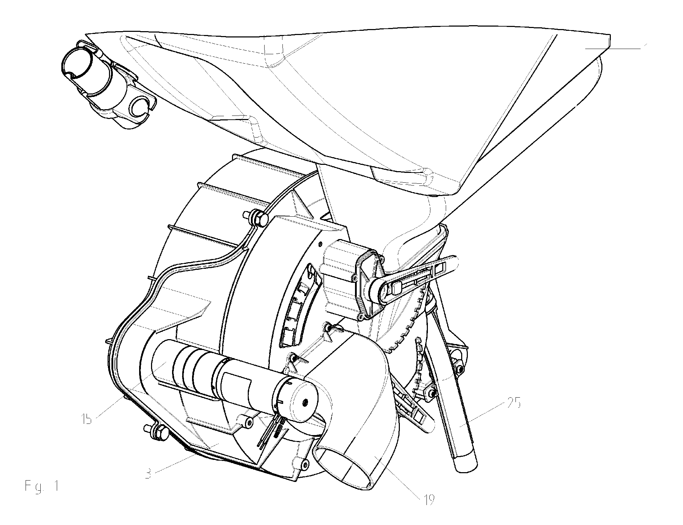

Weitere Einzelheiten der Erfindung sind der Beispielsbeschreibung zu entnehmen. Die Zeichnungen zeigen
- Fig.1: die Vereinzelungseinrichtung der pneumatischen Einzelkornsämaschine in perspektivischer Darstellung,

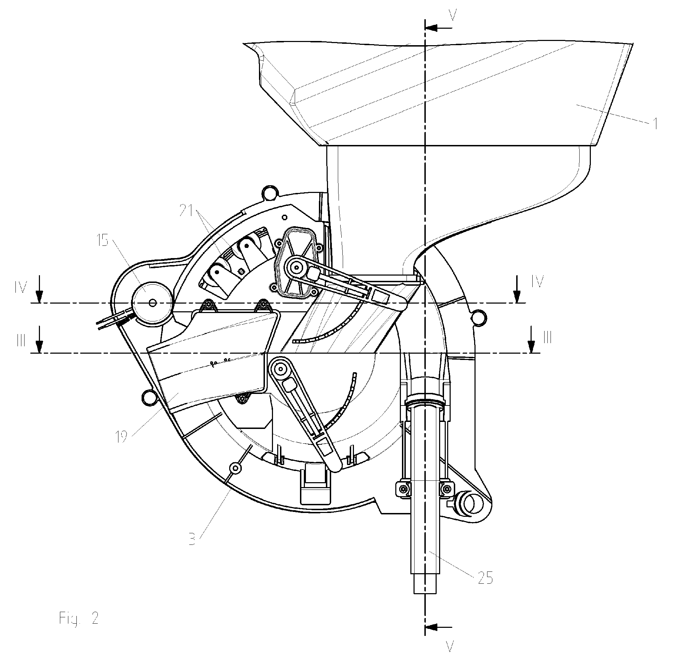

- Fig.2: die Vereinzelungseinrichtung der pneumatischen Einzelkornsämaschine in Seitenansicht,

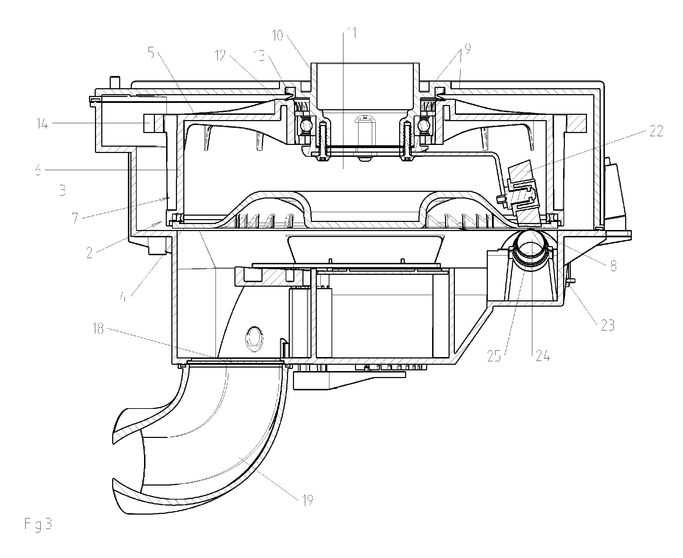

- Fig.3: die Vereinzelungseinrichtung der pneumatischen Einzelkornsämaschine im Schnitt III - III,

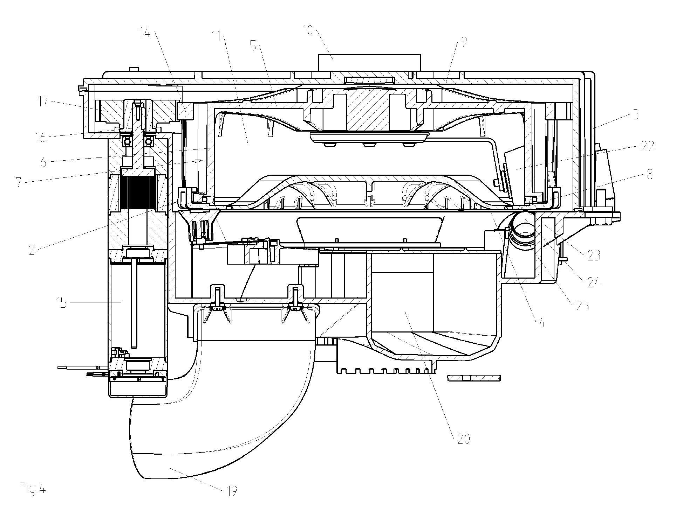

- Fig.4: die Vereinzelungseinrichtung der pneumatischen Einzelkornsämaschine im Schnitt IV - IV und

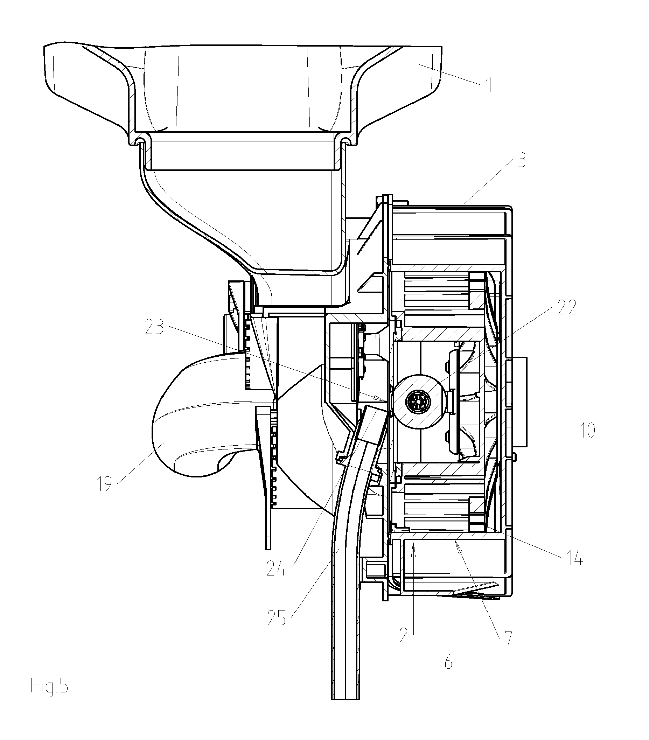

- Fig.5: die Vereinzelungseinrichtung der pneumatischen Einzelkornsämaschine im Schnitt V - V.

Die pneumatische Einzelkornsämaschine weist zumindest einen Saatgutvorratsbehälter 1 auf. Weiterhin ist diesem Saatgutvorratsbehälter zumindest eine Vereinzelungsvorrichtung 2 zugeordnet, die in einem Gehäuse 3 angeordnet ist. Diese Vereinzelungseinrichtung 2 ist drehbar angetrieben und in dem Gehäuse 3 angeordnet. Die Vereinzelungseinrichtung 2 besteht aus zwei beabstandet zueinander angeordneten Seitenwänden 4 und 5 sowie einen Zylindermantel 6 aufweisende geschlossene Hohltrommel 7. In zumindest einer dieser Seitenwände 4 sind kreisförmig angeordnete Perforationen 8 angeordnet. An der einen Gehäusewand 9 des Gehäuses 3 ist eine Hohlwelle 10 angeordnet, die bis in den Innenraum 11 der Hohltrommel 7 geführt ist. Auf dieser Hohlwelle 10 ist die Hohltrommel 7 der Vereinzelungseinrichtung 2 an dem Gehäuse 3 mittels der Lagerung 12 und der Dichtung 13 abdichtend gegenüber dem Gehäuse 3 und der Hohlwelle 10 drehbar gelagert. Somit ist die Hohltrommel 7 mittels dieser Lagerung 12 auf der Hohlwelle 10 drehbar gelagert und mittels der Dichtung 13 gegenüber der Hohlwelle 10 abgedichtet. Das die als Hohltrommel 7 ausgebildete Vereinzelungseinrichtung 2 umschließende Gehäuse 3 ist geschlossen ausgebildet.

Durch die nur eine kleine Reibungsfläche aufweisende Dichtung 13 ist die auftretende Reibung klein und die daraus resultierenden Reibungskräfte sind sehr gering. Somit ist nur eine geringe Antriebsleistung für den rotierenden Antrieb der Hohltrommel 7 der Vereinzelungseinrichtung 2 erforderlich.

An dem äußeren umlaufenden Bereich der Hohltrommel 7 ist ein Zahnrad 14 bzw. eine entsprechende Verzahnung drehfest befestigt. Durch die Gehäusewand 9 des Gehäuses 3 ist in abgedichteter Weise ein elektrischer Antriebsmotor 15 oder die Antriebswelle 16 des Antriebsmotors 15 in das Gehäuse 3 hineinragend hinein geführt. Auf der Antriebswelle 16 des Elektromotors 15 ist ein drehfest angeordnetes Antriebszahnrad 17 angeordnet. Das Antriebszahnrad 17 greift in das an der Hohltrommel 7 angeordnete Zahnradl4 und steht somit mit diesem in direkter Antriebsverbindung. Der Antriebsmotor 15 ist ein in seiner Drehzahl regelbarer Elektromotor und über nicht dargestellte Kabelverbindungen mit einer nicht dargestellten Energieversorgung und Steuer- und Regeleinrichtungen verbunden.

Oberhalb des Gehäuses 3 ist der Vorratsbehälter 1 angeordnet, der druckdicht mittels eines nicht dargestellten Deckels verschließbar ist und mit dem Gehäuse 3, in dem die Vereinzelungseinrichtung 2 angeordnet ist, entsprechend verbunden ist und so mit diesem eine geschlossene Einheit bildet. In dem Gehäuse 3, welches die Vereinzelungseinrichtung 2 umschließt, ist eine Öffnung 18 angeordnet, an welche die mit einer nicht dargestellten als Gebläse ausgebildeten Druckerzeugungseinrichtung über den Leitungsanschluss 19 angeschlossen ist. Somit ist das die als Hohltrommel 7 ausgebildete Vereinzelungseinrichtung 2 umschließende Gehäuse 3 mit einem Überdruck gegenüber dem im Innenbereich 11 der Hohltrommel 7 herrschenden niedrigeren Druck, vorzugsweise Atmosphärendruck beaufschlagbar. Dieses dadurch möglich, dass der Innenraum 11 der Hohltrommel 7 über die Hohlwelle 10, die nicht verschlossen ist, mit dem Atmosphärendruck in Verbindung steht.

Die in den Saatgutvorratsbehälter 1 befindlichen Samenkörner gelangen über die in dem Gehäuse 3 angeordnete Öffnung 20 zu der Seitenwand 4, in welcher sich die Perforationen 8 befinden, der Vereinzelungseinrichtung 2. Somit können sich an die mit einer Druckdifferenz beaufschlagten Perforationen 8, wenn diese durch den Saatgutvorrat geführt werden, die Samenkörner anlagern.

Auf der Seite, an der sich die Samenkörner an den Perforationen 8 der Seitenwand 4 anlagern, sind im oberen Bereich, im Ausführungsbeispiel als rotierende Abstreiferteller 21 ausgebildete Abstreifereinrichtungen angeordnet. Hierdurch wird sichergestellt, dass sich an jeder Perforation 8 nur ein einzelnes Saatkorn anlagert bzw. haften bleibt.

Weiterhin ist der Vereinzelungseinrichtung 2 eine die an den Perforationen 8 anliegende Druckdifferenz unterbrechende Abdeckeinrichtung 22 in Form einer drehbar angeordneten Rolle angeordnet. Mittels dieser Abdeckeinrichtung 22 wird die Druckdifferenz, die an den Perforationen 8 anliegt unterbrochen, so dass die an den Perforationen 8 anhaftenden Samenkörner sich von den Perforationen 8 der Vereinzelungseinrichtung 2 lösen. In diesen Bereich 23, an dem die Abdeckeinrichtung 22 angeordnet ist und die Samenkörner sich von den Perforationen 8 lösen, ist die Öffnung 24 einer Saatgutleitung 25 angeordnet. Aufgrund des in diesem Bereich 23 herrschenden Überdruckes gegenüber dem Atmosphärendruck werden die sich ablösenden Samenkörner von den in die Öffnung 24 der Saatgutleitung 25 hineinströmenden Luftstrom mitgerissen und durch die Saatgutleitung 25 zu den am Ende der Saatgutleitung 25 angeordneten und nicht dargestellten Saatgutablageeinrichtung, wie Säscharen und den diesen zugeordneten Fangrollen gefördert.

## Patentansprüche

1. Pneumatische Einzelkornsämaschine mit zumindest einem Saatgutvorratsbehälter aufweisenden Gehäuse und zumindest einer drehbar angetriebenen und in dem Gehäuse angeordneten Vereinzelungseinrichtung, die in einer kreisförmig verlaufenden Perforationsreihe Perforationen aufweist, einem Gebläse, mittels welchem eine Druckdifferenz an den Perforationen erzeugbar ist, so dass, wenn die Vereinzelungseinrichtung durch den Saatgutvorrat geführt wird, sich an den Perforationen auf der mit dem höheren Druck beaufschlagten Seite der Perforationen Samenkörner anlagern, wobei auf der mit dem niedrigeren Druck beaufschlagten Seite der Perforationen eine die an den Perforationen anliegende Druckdifferenz zum Ablösen der Samenkörner von den Perforationen unterbrechende Abdeckeinrichtung angeordnet ist, wobei im Bereich der Abdeckeinrichtung auf der der Abdeckeinrichtung abgewandten Seite der Vereinzelungseinrichtung das eine Ende einer Ausbringleitung mit ihrer Einmündungsöffnung bis an die Vereinzelungseinrichtung heranreichende Ausbringleitung angeordnet ist, wobei die Vereinzelungseinrichtung als eine zwei beabstandet zueinander angeordnete Seitenwände aufweisende geschlossene Hohltrommel ausgebildet ist, wobei in zumindest einer dieser Seitenwände die Perforationen angeordnet sind, wobei durch zumindest eine der Seitenwände eine Hohlwelle bis in den Innenraum der Hohltrommel geführt ist, wobei die Hohltrommel mittels einer Lagerung auf der Hohlwelle gelagert und mittels einer Dichtung gegenüber der Hohlwelle abgedichtet ist, **dadurch gekennzeichnet, dass** das die als Hohltrommel (7) ausgebildete Vereinzelungseinrichtung (2) umschließende Gehäuse (3) geschlossen ausgebildet und über das Gebläse mit einem Überdruck gegenüber dem im Innenraum (11) der Hohltrommel (7) herrschenden niedrigeren Druck, vorzugsweise Atmosphärendruck beaufschlagbar ist.

2. Einzelkornsämaschine nach Anspruch 1, **dadurch gekennzeichnet, dass** an der Hohltrommel (7) ein Zahnrad (14) befestigt ist, dass durch die Gehäusewand (9) des Gehäuses (3) in abgedichteter Weise ein Antriebsmotor (15) und/oder eine Antriebswelle (16) in das Gehäuse (3) hineinragt, dass an dem Antriebsmotor (3) und/oder der Antriebswelle (16) ein drehfest angeordnetes Antriebszahnrad (17) angeordnet ist, dass das Antriebszahnrad (17) mit dem an der Hohltrommel (7) angeordneten Zahnrad (14) in Antriebsverbindung steht.

3. Einzelkornsämaschine nach Anspruch 1, **dadurch gekennzeichnet, dass** der Antriebsmotor (15) ein in seiner Drehzahl regelbarer Elektromotor ist.
